# EUROPEAN PATENT APPLICATION

(11) **EP 4 760 371 A1**
(43) Date of publication of application: **17.06.2026**
(21) Application number: 25221839.1
(22) Date of filing: 09.12.2025
(51) Int. Cl.: G02B 27/01, G02C 5/14

(54) **IMPROVED REAR-VIEW GLASSES**

(30) Priority: 10.12.2024 IT 202400028008
(71) Applicant: Tentori, Alfonso, 23851 Galbiate (LC) (IT); Tentori, Gabriele, 23851 Galbiate (LC) (IT); Tentori, Lorenzo, 23851 Galbiate (LC) (IT)
(72) Inventor: TENTORI, Gabriele, 23851 Galbiate (LC) (IT); TENTORI, Lorenzo, 23851 Galbiate (LC) (IT)
(74) Representative: Botti & Ferrari S.p.A.

(57) **Abstract**

The present invention refers to glasses (1) comprising a frame (2) comprising a front (3) and a pair of temples (4), a pair of lenses (5), at least one image acquisition device (10) connected to the frame (2) and with an acquisition direction (D2) opposite a viewing direction (D1).

The glasses (1) according to the invention further comprise a noise detection sensor (13) within a predetermined range of sound intensity frequency and an amplification device (14) of said noise.

At least one of said pair of lenses (5) comprises a first lens portion (5A) for a frontal view in the viewing direction (D1) and a second lens portion (5B), smaller in size than the first lens portion (5A), consisting of an electronic lens connected to the image acquisition device (10).

The at least one image acquisition device (10) and/or the connection of the second lens portion (5B) with the image acquisition device (10) are activated by means of a microprocessor, housed in the glasses (1), for the execution of machine learning algorithms configured to process the information coming from the image acquisition device (10).

## Description

### Field of application

The present invention refers to a pair of glasses equipped with a rear-view mechanism.

The present invention finds application in the binocular glasses field, generally indicated with the term glasses, in particular, but not limitedly, for those adopted in the sports field, specifically for cycling, but also for those adopted in the use of different vehicles, or for those adopted in everyday contexts.

### Prior art

In the present technical field, it is well known that there are various types of glasses depending on the function they perform: prescription glasses, reading glasses, protective glasses, augmented reality glasses, virtual reality glasses.

In the sports field, but not only, there are also various issues related to safety, particularly due to the approach of a possible danger from a direction that cannot be perceived within one's field of vision.

For instance, in the case of the cycling practice, the cyclist does not have full visual perception of the surrounding environment and this, even if the other senses do not allow them to perceive danger, may lead to accidents.

A more specific example can be given of cycling on a road where vehicles are also allowed to circulate, in a particularly crowded situation, with consequent noise that makes it impossible for the ears to clearly receive all of the stimuli received at the same time, or where the cyclist constantly turns his head, with further related drawbacks, or the approach of a vehicle from behind may constitute a potential hazard.

This issue may also extend beyond the cycling field and in the sports field in general, as similar issues may arise with the use of other increasingly popular vehicles, such as scooters.

Furthermore, especially in very crowded and/or noisy environments, it is possible to fail to become aware of a potential danger coming from a position outside one's field of vision, with implications for personal safety.

Given the increasing number of contexts in which these types of concerns arise, the above is increasingly being studied in order to find a practical solution.

Glasses, given their widespread use both for functional purposes and for simple aesthetic reasons, are being evaluated as a possible solution to the problems described above.

There are many examples of studies investigating the integration of similar awareness systems for vulnerable road users, such as cyclists, but not only.

In this regard, solutions based on different concepts have been developed that provide various types of feedback for glasses users, from visual tools to auditory tools, integrated into different components.

For instance, solutions involving a light signal activated by one or more sensors have been studied.

Although immediate, this solution has the drawback of also leading to unwanted activations without there being any actual imminent danger.

Other solutions involve the use of different types of lenses with mirrored sections that allow the user to widen their field of vision.

Even in this case, although this solution is particularly practical, it does not provide a 360° view around the user, leaving potentially dangerous blind spots.

Furthermore, solutions are planned that interface with external devices, for instance, mounted on a helmet or in a smartwatch.

Of course, such solutions have the drawback of delegating the operation of these 'smart glasses' to a different device, with drawbacks related to the greater likelihood of malfunction, as well as the different economic impact for the user.

WO 2024/029804 A1 describes an electronic device, in an embodiment consisting of a pair of glasses, capable of determining a danger degree in the surrounding environment based on an image obtained through a camera, a sensor, and a microphone.

Therefore, although some solutions are being studied, there are still some drawbacks that penalise those of the known type proposed to date.

The technical problem underlying the present invention is to provide a solution able to overcome the drawbacks of the known solutions.

Another object of the invention is to provide a solution that allows integrating all of the components needed to perform all of the required functions into a single apparatus.

Another object of the invention is also to provide a solution that provides a user with a 360° view of the surrounding environment without having to turn their head.

A further object of the invention is to provide a solution that minimises the expected dimensions and weights.

Still another object of the invention is to provide a robust solution.

Finally, an object of the invention is to provide a solution with a pleasing aesthetic impact, similar to widely used glasses.

### Summary of the invention

The solution idea underlying the present invention is to provide a solution that provides timely and extremely accurate feedback on what is happening behind a user, displaying it in their field of vision.

Based on said solution idea, the technical problem is solved by glasses comprising a frame comprising a front and a pair of temples, a pair of lenses, and at least one image acquisition device connected to the frame and with an acquisition direction that is opposite a viewing direction.

At least one of said pair of lenses comprises a first lens portion for a frontal view in the viewing direction and a second lens portion, smaller in size than the first lens portion, consisting of an electronic lens connected to the image acquisition device.

By definition, an "electronic lens" uses a combination of static or varying electric and magnetic fields to focus streams of electrons.

The at least one image acquisition device and/or the connection of the second lens portion with the image acquisition device are activated by means of a microprocessor, housed in the glasses, for the execution of machine learning algorithms configured to process the information coming from the image acquisition device.

Advantageously, the present solution allows viewing what is happening behind one's back in real time, without turning one's head more than 90°, thus reducing the drawbacks caused by a lack of awareness of imminent danger.

Moreover, advantageously, said solution allows training the microprocessor in identifying those signals that indicate the actual presence of a danger (for instance, but not only, an approximation speed to the user from behind, the presence of specific objects detected in the image, etc.), thus enabling activation in case of actual need and giving the user sufficient reaction time.

The glasses according to the invention further comprise a noise detection sensor within a predetermined range of sound intensity frequency and an amplification device of said noise.

Advantageously, it is thus possible to set the sensor to detect frequencies below the conventional range of best audibility for the human ear, between 200 Hz and 4,000 Hz and to amplify such noises so that a user may distinguish their source.

According to a first embodiment, the second lens portion is superimposed on the first lens portion, preferably at a surface adjacent a perimeter of the first lens portion.

Advantageously, said solution is optimal from a productive point of view, being able to produce two lenses, each with its own unique peculiarities, thus enhancing their specific technical functions.

According to an alternative embodiment, the first lens portion and the second lens portion are integrated in a single lens made of an enbloc.

Advantageously, the present solution reduces the overall size of the glasses, also allowing for different models with different thicknesses.

According to an embodiment of the invention, the at least one image acquisition device and/or the connection of the second lens portion with the image acquisition device are further activatable by means of a voice command or a button command integrated in the frame.

Advantageously, this ensures that the activation and rear-view functions are not lost in the event of a malfunction until the necessary maintenance work has been carried out.

In an embodiment, the at least one image acquisition device is removably fixed to at least one of the pair of temples.

Advantageously, said solution allows moving the at least one image acquisition device as required and also allows for easy maintenance or replacement.

According to a different embodiment, the at least one image acquisition device is integrated in at least one of the pair of temples.

Advantageously, said solution is less bulky in the overall construction of the glasses according to the invention.

Preferably, the glasses according to the invention further comprise a disposable or rechargeable battery housed in the frame.

Advantageously, said solution is optimal for everyday use and anywhere of the glasses according to the invention.

The preferred housing may be selected based on the desired glasses model.

Still preferably, the glasses according to the invention further comprise a wireless connection device adapted to send a signal to at least one external device.

Advantageously, said solution also allows remote control in case of specific user requirements.

Further features and advantages will become apparent from the following detailed description of a preferred, but not exclusive, embodiment of the glasses according to the present invention, with reference to the appended drawings given by way of indicative and non-limiting example.

### Brief description of the drawing

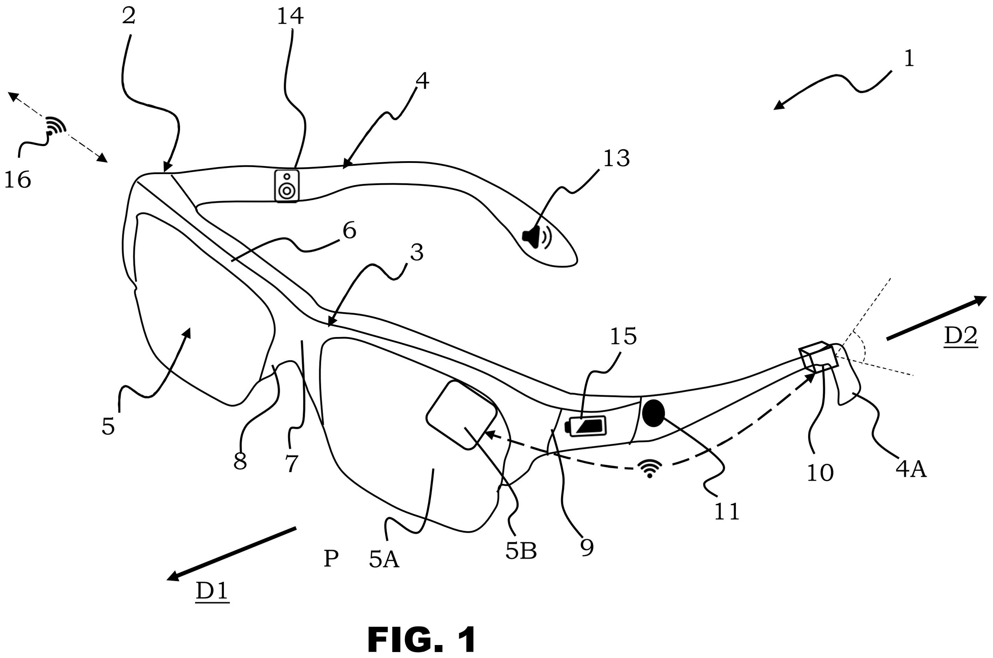

- Figure 1 shows a schematic view of the glasses made according to the present invention.

### Detailed description

With reference to figure 1, binocular glasses, or glasses, made according to the present invention are described, globally indicated as glasses 1.

It should be noted that figure 1 represents a schematic view and is not drawn to scale, instead it is represented so as to enhance the important features of the invention. Furthermore, in figure 1, the different pieces are shown schematically since their shape may vary according to the desired application.

The glasses 1 comprise a frame 2, in turn comprising a front 3 and a pair of temples 4 and a pair of lenses 5.

The front 3, in the present embodiment, comprises two rims 6 to contain the pair of lenses 5, a bridge 7 to join the two rims 6, two nose pads 8, in this case made integrally to allow the frame 2 to rest on the user's nose, and two nose pieces 9 representing the ends of the front 3, at which points the respective temples 4 are connected.

The glasses 1 further comprise at least one image acquisition device 10 connected to the frame and having an acquisition direction D2 opposite a viewing direction D1.

In the present embodiment, the image acquisition device 10 is represented by a microchamber integrated at an end 4A of one of the pair of temples 4.

Nothing prevents from providing a different positioning of the image acquisition device 10 or the use of several image acquisition devices 10 differently positioned on the frame 2.

Furthermore, nothing prevents from providing an image acquisition device 10 that is removably fixed to the frame 2, so as to allow a practical replacement thereof in the event of malfunction or simple displacement to another position of the frame 2.

Nothing prevents from also providing intermediate elements between the frame 2 and the image acquisition device 10.

At least one of the pair of lenses 5 comprises a first lens portion 5A for a frontal view in the viewing direction D1 and a second lens portion 5B, smaller in size than the first lens portion 5A, consisting of an electronic lens connected to the image acquisition device 10.

By definition, an "electronic lens" uses a combination of static or varying electric and magnetic fields to focus streams of electrons.

The connection between the second lens portion 5B consisting of the electronic lens and the image acquisition device 10 may be achieved in various ways, either via a wireless connection or even via a through-cable solution in the frame 2.

In the case of a wireless connection, it is also possible to adopt different communication protocols known to the persons skilled in the art.

In the present embodiment, the second lens portion 5B is superimposed on the first lens portion 5A, at a preferred portion, i.e. at a surface adjacent to a perimeter P of the first lens portion 5A, and interposed between the lens 5 and the user's eye.

This position is preferred, so that the glasses 1 user will simultaneously have full control over what is happening on the second lens portion 5B, which shows him/her what is happening in the field of view of the image acquisition device 10, and what is happening in front of him/her in the viewing direction D1.

However, nothing prevents from providing a different positioning of the second lens portion 5B, also depending on any different dimensions, or a different solution to be adopted on each of the pair of lenses 5 or a possible positioning thereof outside the lens 5 on which it is superimposed, opposite the user's eye.

According to an alternative embodiment, the first lens portion 5A and the second lens portion 5B are integrated in a single lens made as an enbloc.

In other words, it is possible to form a lens 5 that is partially made of an electronic part and partially of a part that is exclusively intended for viewing in the viewing direction D1.

In this way, although through a more complex production process, it is possible to reduce the overall dimensions and, in particular, the thickness on the front 3 of the frame 2, thus increasing the design possibilities of the glasses 1, also in view of their aesthetic impact.

The image acquisition device 10 and/or the connection of the second lens portion 5B with the image acquisition device 10 are activated by means of a microprocessor, housed in the glasses 1, for the execution of machine learning algorithms configured to process the information coming from the image acquisition device 10.

In other words, an AI system is trained in order to identify and interpret the images behind the user, so as to connect them to an imminent potential danger signal, and to determine the projection of the image on the second lens portion 5B.

Advantageously, said solution allows understanding which signals indicate the actual presence of a danger (for instance, but not limited to, the approaching speed to the user from behind, the presence of specific objects detected in the image, etc.), allowing an activation in case of actual need and giving the user the right amount of time to react.

It is easy to understand how the present solution may find useful application in the sports field or in the use of other vehicles outside the sports field, such as the increasingly popular city scooters, but it also has a wide range of applications for increasing personal safety.

For instance, a possible variant of the present embodiment, included in the scope of protection defined by the appended claims, may provide for the connection of the microprocessor to a remote control unit comprising its own internal memory database.

In this case, in said database there may be information relating to elements characteristic of the approximation of a danger, whether related to the movements of other individuals or to the movements of objects, as well as relating to subjects that are potentially dangerous to the personal safety of the individual.

The artificial intelligence may be trained to detect the objects and the related distance, a feature developed in the prior art for instance by exploiting boundary boxes and reference points not only to evaluate the two-dimensional image but also the relative distance, as well as individuals and their distance, adding a biometric scan to what has been said in relation to objects.

In the presence of a database, all these detected data may be compared with reference data.

The present solutions allow becoming aware of imminent danger well in advance.

Meanwhile, it is also possible to provide for the activation of an automatic alarm signal not only for the user but also for third parties, so as to alert, for instance, the relevant security authorities to the presence of dangers that need to be averted promptly.

Further, it is possible to provide for backup commands, represented for instance by a voice command, therefore with a receiving element and with a command execution element (not shown) and/or a button command 11, preferably of the touch-sensitive type, integrated in the frame 2.

Another possible system may be linked to the detection of the pupil's position to determine the required activation of at least one image acquisition device 10 and/or the connection of the second lens portion 5B with the image acquisition device 10.

This ensures that the activation and rear-view functions are not lost in the event of malfunction until the necessary maintenance work has been carried out.

Therefore, automatically, or backed up at the user's request, an image of the environment behind the user of the glasses 1 will be projected on the second lens portion 5B, placed for instance between the lens 5 of the glasses 1 and the eye, thus creating an image in front of the user's eyes, who anyway will continue to see in front of him/her.

Moreover, from the outside, it will not be possible to see either the projected image or the fact that the subject is viewing it, and the glasses will not appear different from normal glasses, thus preserving the aesthetics and design thereof.

The glasses 1 further provides a noise detection sensor 13 within a predetermined range of sound intensity frequency and an amplification device 14 of said noise, preferably both integrated inside one of the pair of temples 4.

Advantageously, it is thus possible to set the noise detection sensor 13 to detect frequences less than the conventional area of best audibility of the human ear between 200 Hz and 4,000 Hz and to amplify such noises by means of the connected amplification device 14 of said noise, so as to allow the user to distinguish the source thereof.

Said solution further improves the awareness of the user of the glasses 1 of the surrounding environment in any situation, thus enhancing safety, especially in specific contexts such as sports, particularly cycling.

The glasses 1 according to the invention are preferably powered either by an internal power supply in the image acquisition device 10 or by a disposable or rechargeable battery 15 housed in the frame 2, for instance with a charging socket provided at the end of one of the pair of temples 4.

Alternatively, a case (not shown) for the glasses 1 may also be provided, which can be connected to an electrical socket and powers the battery 10 by induction.

The housing of the battery 15 may be provided in several positions in the frame 2 itself, also depending on the presence and arrangement of the other alternatives described above.

It is further possible to provide for a wireless connection device 16, schematically represented, adapted to send a signal to at least one external device, for instance allowing managing some functions and options of the glasses 1 through smartphone or smartwatch.

In a preferred, non-limiting embodiment, the glasses 1 comprise two rear-view image acquisition devices 10 connected to two microprocessors and powered by a power bank located directly on the glasses 1.

The acquired data is sent via the wireless connection 16, for example to a mobile device, which processes and sends alerts via sound signals integrated into the glasses 1, notifications, and visual messages projected onto the electronic lens of the glasses 1.

An application, developed in Python programming language, for example, runs continuously on the two microprocessors installed on the glasses 1, waiting to receive REST calls, i.e. standardised HTTP requests to communicate with web APIs (Application Programming Interfaces), from another application.

Upon receipt of such a call, an image is captured and sent to the application.

Thanks to a multithreading mechanism, this operation is performed in a perfectly synchronised manner on both image capture devices 10 of the glasses 1 so that a pair of images taken at the same instant is always acquired.

Furthermore, once the pair of images has been received, the application running on the two microprocessors preferably also performs processing with integrated artificial intelligence on at least one of the two images.

At the same time, a feature matching comparison is preferably performed on the pair of images in order to reconstruct the disparity for certain key points and estimate the distance of these key points from the user of glasses 1.

The fusion of the results from artificial intelligence for the identification, or segmentation, of objects and the system for estimating the distance of key points from the image acquisition devices 10 allows the distance of potentially "dangerous" elements from the user of the glasses 1 to be estimated.

Of all the key points identified, only those within a bounding box, or a mask in the case of a segmentation algorithm, are considered, and the average distance is estimated in this way.

Artificial intelligence models can also be run directly on a smartphone or any platform, requiring little computational power.

Advantageously, the present invention allows having glasses, even selected form an aesthetic point of view, which integrate the function of viewing from behind through a related image acquisition device 10 and which project on at least one second lens portion 5B, located, for instance, between the lens 5 and the user's eye.

Advantageously, the present invention considerably increases safety for the related users.

Still advantageously, the present invention avoids the problems present in the prior art solutions of unwanted operations.

Still advantageously, the present invention provides for a practical and intuitive use for its users.

Further advantageously, the present invention is particularly compact, optimised in terms of size and weight for the user on the one hand, and optimised in terms of production and related costs on the other hand.

Finally, advantageously the present invention is ideal for mass production and may be manufactured in different models, also based on aesthetic considerations.

A person skilled in the art will appreciate that changes and variations may be made to the present invention, all included in the scope of protection of the invention as defined by the appended claims.

For instance, nothing prevents from providing different shapes of certain components, such as rimless frames or others, or the use of further additional components.

## Claims

1. Glasses (1) comprising:
- a frame (2) comprising a front (3) and a pair of temples (4);
- a pair of lenses (5);
- at least one image acquisition device (10) connected to said frame (2) and with an acquisition direction (D2) opposite a viewing direction (D1);
- a noise detection sensor (13) within a predetermined range of sound intensity frequency and an amplification device (14) of said noises;
wherein at least one of said pair of lenses (5) comprises a first lens portion (5A) for a frontal view in said viewing direction (D1) and a second lens portion (5B), smaller in size than said first lens portion (5A), consisting of an electronic lens connected to said image acquisition device (10),
wherein said at least one image acquisition device (10) and/or said connection of said second lens portion (5B) with said image acquisition device (10) are activated by means of a microprocessor, housed in the glasses (1), for the execution of machine learning algorithms configured to process the information coming from said image acquisition device (10).

2. Glasses (1) according to claim 1, wherein said second lens portion (5B) is superimposed on said first lens portion (5A), preferably at a surface adjacent to a perimeter (P) of said first lens portion (5A).

3. Glasses (1) according to claim 1, wherein said first lens portion (5A) and said second lens portion (5B) are integrated in a single lens (5) made as an enbloc.

4. Glasses (1) according to any of claims 1 to 3, wherein said at least one image acquisition device (10) and/or said connection of said second lens portion (5B) with said image acquisition device (10) are further activatable by means of a voice command.

5. Glasses (1) according to any of claims 1 to 4, wherein said at least one image acquisition device (10) and/or said connection of said second lens portion (5B) with said image acquisition device (10) are further activatable by means of a push-button control (11) integrated in said frame (2).

6. Glasses (1) according to any of claims 1 to 5, wherein said at least one image acquisition device (10) is removably fixed to at least one of said pair of temples (4).

7. Glasses (1) according to any of claims 1 to 5, wherein said at least one image acquisition device (10) is integrated in at least one of said pair of temples (4).

8. Glasses (1) according to any of claims 1 to 7, further comprising a disposable or rechargeable battery (15) housed in said frame (2).

9. Glasses (1) according to any of claims 1 to 8, further comprising a wireless connection device (16) adapted to send a signal to at least one external device.
